# FASCICULE DE BREVET EUROPEEN

(11) **EP 2 321 108 B1**
(45) Date de publication et mention de la délivrance du brevet: **02.12.2015**
(21) Numéro de dépôt: 09784227.2
(22) Date de dépôt: 24.06.2009
(51) Int. Cl.: B29C 45/56, A44B 18/00

(54) **DISPOSITIF POUR MOULER PAR INJECTION UN OBJET COMPORTANT UN CHAMP DE CROCHETS**
SPRITZGUSSVORRICHTUNG ZUM FORMEN EINES ARTIKELS MIT EINEM HAKENBEREICH
APPARATUS FOR INJECTION MOULDING AN ARTICLE HAVING A FIELD OF HOOKS

(30) Priorité: 01.07.2008 FR 0803707
(43) Date de publication de la demande: 18.05.2011
(73) Titulaire: Aplix, 75008 Paris (FR)
(72) Inventeur: MAHE, Anthony, F-44450 St Julien de Concelles (FR)
(74) Mandataire: Intès, Didier Gérard André
(86) Numéro de dépôt international: PCT/FR2009/000769
(87) Numéro de publication internationale: WO 2010/004117

(56) Documents cités:
- EP-A- 1 749 456
- FR-A- 2 868 135
- JP-A- 2 139 211
- JP-A- 5 116 194
- US-A- 5 015 426
- US-A- 5 656 226
- US-A- 5 845 375
- US-A- 6 163 939
- US-A1- 2001 001 088
- US-B1- 6 224 364

## Description

Le présent exposé se rapporte à un objet d'une pièce et d'un seul tenant obtenu par moulage par injection en au moins un point d'injection, constitué d'un corps principal ayant un volume de corps défini par l'espace à l'intérieur d'une surface extérieure, l'objet moulé étant par exemple un panneau intérieur de portière de véhicule automobile.

Le présent exposé se rapporte aussi à un dispositif formant moule d'injection destiné à former par moulage par injection un objet moulé de ce genre, ainsi qu'à un bloc formant insert de moulage destiné à être inséré dans un moule du genre ci-dessus.

On connaît déjà dans l'art antérieur des objets moulés de ce genre.

On aimerait ajouter à la surface extérieure de l'objet au moins un crochet, et de préférence un champs de crochets;
1) qui soit issu du même moulage du corps principal en étant d'une pièce avec lui;
2) qui ait un volume de crochets sensiblement plus petit que le volume de corps, c'est à dire au moins cent fois plus petit, de préférence au moins mille fois plus petit, par exemple entre 100.000 et 100.000.000 fois plus petit que le volume du corps ; et
3) dont les crochets soient minces, c'est-à-dire aient une dimension transversale la plus petite au niveau de leur base qui soit inférieure à l'épaisseur de l'objet au niveau de la base, mesurée le long de la droite normale à la surface.

Le ou chaque crochet est destiné à former la partie mâle d'un dispositif auto agrippant à crochets et boucles ou à crochets dans crochets, pour coopérer notamment par exemple avec des boucles ou des crochets d'un autre objet pour fixer l'objet moulé à cet autre objet.

Dans la présente demande, on entend par crochet un élément comportant une tige et une partie d'accrochage faisant saillie latéralement de la tige, notamment un harpon, un double crochet, un champignon et analogues.

Jusqu'à maintenant dans l'art antérieur, en particulier comme décrit dans EP-B1-0,577,697, on a déjà réussi par moulage d'une pièce dans un même moule à réaliser des plaques à crochets comportant une plaque de petite épaisseur et des crochets épais, notamment ayant une largeur plus grande que l'épaisseur de la plaque. Cependant, avec le procédé décrit, il n'est pas possible d'obtenir des crochets qui ont une très petite dimension en largeur de leur tige.

Dans EP-B1-0577697, il est utilisé un moule d'injection pour former l'objet moulé (une genouillère orthopédique) à la surface extérieure duquel est formé par moulage dans le même moule un champ de crochets destinés à coopérer ensuite avec des boucles. Classiquement, on prévoit qu'une partie de la surface intérieure du moule comporte un champ de cavités ayant la forme approximativement complémentaire des crochets que l'on souhaite réaliser. Ce champ de cavités est disposé dans une position qui convient pour que les crochets soient formés à l'endroit précis où l'on souhaite qu'ils soient formés sur l'objet moulé final. On injecte ensuite de la matière de moulage, notamment thermoplastique, dans le moule, qui remplit l'espace intérieur du moule et également les cavités de moulage des crochets pour obtenir ainsi l'objet moulé comportant un champ de crochets issus d'une pièce d'une partie de la surface extérieure de l'objet.

Cependant, ce moule et ce procédé ne permettent pas de fabriquer l'objet moulé avec des crochets de petit volume et/ou de petite largeur.

L'inconvénient en effet est que la pression de l'injection de la matière thermoplastique n'est pas suffisante pour que celle-ci pénètre effectivement dans les cavités de formation des crochets, cavités qui sont de petite dimension relativement au volume de l'objet final.

On connaît déjà dans l'art antérieur, en particulier du brevet américain US 6 224 364, un système fondé sur un surmoulage qui permet d'améliorer la qualité du remplissage des cavités du champ de cavités par la matière thermoplastique et d'obtenir des crochets de plus petites hauteur et largeur que l'épaisseur de l'objet au niveau des crochets. Cependant, la technique proposée dans ce document antérieur présente plusieurs inconvénients. En premier lieu, l'objet final obtenu n'est pas d'une seul pièce, mais en deux pièces surmoulées l'une à l'autre et séparées par une interface dans la matière même de l'objet qui sépare les crochets de la majeure partie du reste de l'objet. Or cette interface implique une fragilité de l'objet préjudiciable à sa longévité. En effet, cette interface peut constituer à terme une zone de moindre résistance à la traction des crochets et entraîner une détérioration rapide de l'objet moulé, notamment un détachement de la zone du champs de crochets de objet moulé, rendant celui ci inutilisable en coopération avec un autre objet à boucles ou à crochets auquel on souhaite le fixer. D'autre part, le dispositif formant moule est de conception compliquée, nécessitant impérativement de prévoir plusieurs ouvertures d'injection de la matière et notamment une ouverture d'injection en face du champ de cavités de formation des crochets et d'avoir une partie qui est mobile par rapport au reste du moule, ce qui présente des difficultés à la fois de conception et d'utilisation, notamment en termes d'étanchéité et de fiabilité à long terme. D'autre part, une fois le moule construit on ne peut que difficilement modifier la position de ce champ de cavités n'importe où dans le moule, sauf à fabriquer de nouveau entièrement le moule. Le procédé ainsi décrit présente également l'inconvénient d'être en deux étapes, ce qui rallonge le temps de fabrication de l'objet moulé final.

Suivant l'invention, on a réussi à obtenir pour la première fois un objet d'une pièce et d'un seul tenant obtenu par moulage par injection en au moins un point d'injection, constitué d'un corps principal ayant un volume de corps défini par l'espace à l'intérieur d'une surface formant enveloppe extérieure, et d'au moins un crochet, de préférence un champ de crochets, issu de même moulage du corps principal de l'objet moulé, le crochet ou chaque crochet ayant une tige ayant un axe longitudinal et une partie d'accrochage faisant saillie latéralement de la tige.

Le volume des crochets est sensiblement plus petit que le volume du corps, c'est à dire au moins cent fois plus petit, de préférence au moins mille fois plus petit, par exemple entre 100.000 et 100.000.000 fois plus petit que le volume du corps ; et
- la largeur, ou plus petite dimension transversale, de la tige, mesurée transversalement à l'axe longitudinal, est inférieure à l'épaisseur du corps principal, mesurée le long de l'axe longitudinal de la tige.

De préférence, la plus grande dimension en hauteur du crochet ou de chaque crochet, mesurée le long de l'axe longitudinal, est inférieure à l'épaisseur du corps principal mesurée le long de l'axe longitudinal de la tige.

De préférence, le champs de crochets ne recouvre qu'une petite partie de la surface extérieure, notamment strictement moins de la moitié de cette surface extérieure, de préférence moins de 30%.

De préférence, la largeur de la base de la tige, est inférieure à 0,29 mm, notamment est comprise entre 0,05 et 0,15 mm.

Pour obtenir un tel objet moulé, on peut, suivant l'invention, utiliser un dispositif formant moule pour former un objet moulé par injection d'une matière de moulage, notamment thermoplastique, comportant une surface fermée intérieure définissant une chambre principale de moulage, au moins une ouverture pour l'introduction de la matière de moulage étant formée pour pouvoir introduire par injection la matière de moulage dans la chambre de moulage, au moins une cavité de forme complémentaire d'au moins un crochet, de préférence un champ de cavités, débouchant à une partie de la surface intérieure, la dite une partie de la surface intérieure étant entourée par une surface de • bord ne comportant pas de cavité. Le moule est prévu des moyens pour solliciter au moins une partie de la surface de bord et une partie opposée de la surface intérieure l'une vers l'autre, l'agencement étant tel que la sollicitation des moyens de sollicitation est limitée, de sorte que les deux surfaces sollicitées l'une vers l'autre ne peuvent venir en contact complet l'une avec l'autre, et il existe toujours entre les deux surfaces un interstice.

La présente invention surmonte les inconvénients des dispositifs de l'art antérieur en proposant un dispositif formant moule de conception simple, qui notamment peut ne nécessiter qu'une seule ouverture pour l'introduction de la matière thermoplastique, qui permet d'obtenir un objet moulé final comportant des crochets d'une pièce avec l'objet moulé, et ce en pouvant positionner le champ de crochets sensiblement à n'importe quel endroit de la surface extérieure de l'objet moulé et qui permet d'obtenir un objet moulé et un champ de crochets qui sont véritablement d'une pièce et notamment ne comporte pas d'interface entre la partie principale de l'objet et le champ de crochets et qui sont de petite dimension par rapport au corps de l'objet.

Dans les systèmes connus du genre décrits dans US-A-6.224.364, la matière thermoplastique, qui est destinée à former les crochets, n'est pas aidée à pénétrer dans les cavités d'une manière qui soit plus forte que dans les systèmes antérieurs dans lesquels on positionne les cavités de formation des crochets de sorte que ceux ci soient formés à la fin du remplissage de la cavité de moulage. En particulier, les inventeurs de la présente invention se sont rendus compte qu'il apparaît un phénomène que l'on peut qualifier d'hésitation, qui consiste en ce que la matière « hésite » à pénétrer dans les cavités de formation de crochets et une sorte de peau se forme alors qui bouche l'ouverture de la cavité et empêche la matière d'y pénétrer, de sorte que, à l'extraction de l'objet moulé du moule, celui ne comporte pas de crochets ou que des crochets manquent dans le champs par rapport au nombre de cavités. Suivant l'invention, au contraire on améliore la pénétration de la matière dans les cavités, à matière thermoplastique et forme des cavités des crochets égales, en faisant en sorte que la pression d'introduction de la matière thermoplastique dans les cavités de moulage des crochets soit très grande très rapidement, notamment plus rapidement que dans les systèmes antérieurs connus. Cette augmentation rapide de la pression a pour effet d'augmenter la vitesse à laquelle arrive la matière devant les ouvertures des cavités, ce qui tend à empêcher la formation de la peau comme dans l'art antérieur et permet ainsi d'obtenir des crochets de volume relatif très petits..

Suivant un mode de réalisation préféré, la chambre principale de moulage est de forme sensiblement complémentaire de l'objet à mouler.

De préférence, l'interstice est de très petite dimension et notamment est compris entre 0,01 et 0,1 mm.

Suivant l'invention, on mesure cet interstice dans la direction perpendiculaire au deux surfaces se faisant face au(x) point(s) de ladite une partie surface le ou les plus éloignés de la surface opposée.

En particulier, cet interstice ou jeu est très inférieur à la profondeur des cavités de forme complémentaire des crochets et, notamment, au moins dix fois inférieur, de préférence au moins cent fois inférieur.

Ainsi, suivant l'invention, il n'est plus nécessaire de prévoir une ouverture qui débouche dans ladite surface opposée pour former la partie à crochets après que la majeure partie de l'objet moulé ait été formée. On peut notamment introduire la matière thermoplastique de moulage par une ouverture unique et cette matière thermoplastique va emplir l'ensemble de la chambre principale à l'exception de l'interstice entre la surface à crochets et la surface opposée, la dimension de l'interstice étant en effet choisie si petite que la matière thermoplastique ne peut pas y pénétrer sans qu'une pression correspondant à celle qui prévaut Lorsque sensiblement toute la chambre est emplie de matière de moulage, lui soit appliquée, et c'est seulement une fois que toute la majeure partie (c'est à dire hors l'interstice) dans la chambre a été emplie, la pression de la matière thermoplastique augmentant, que celle-ci va pouvoir s'infiltrer dans l'interstice en allant à l'encontre de la force crée par les moyens de sollicitation. Dès qu'elle commence à s'infiltrer dans l'interstice, la force appliquée par la matière devient bien supérieure à la force de sollicitation. Le volume au dessus des cavités est alors libéré d'un coup, la matière remplissant alors le volume ainsi que les cavités de formation des crochets très rapidement, sous une pression très élevée, à la manière d'une explosion.

Comme le moulage se fait par une unique étape d'introduction ou d'injection de la matière thermoplastique dans le moule, on n'attend pas pour mouler les crochets, comme c'était le cas dans l'art antérieur, que la majeure partie de la matière thermoplastique ait refroidi pour ensuite former les crochets et, par conséquent, il ne se forme pas d'interface dans la matière entre le champ de crochets et le reste de l'objet moulé et l'objet moulé et les crochets sont formés en étant uniformément d'une pièce. Une des particularités du produit obtenu est que la matière pénètre par tout le pourtour de la zone sollicitée, en se rassemblant dans une zone centrale selon un motif pouvant être un point, une ligne ou une étoile en fonction de la forme du champ de crochets. Le front de matière n'ayant pas le temps de refroidir en raison de la rapidité de l'opération, la zone de jonction ne constitue pas une véritable interface (en particulier il n'y a pas d'interface visible à l'oeil nu) entre les crochets et le reste de l'objet moulé, et par conséquent ne constitue pas une zone de plus grande fragilité de la pièce. En particulier, seule une analyse d'orientation moléculaire permettrait de mettre en évidence cette zone.

De préférence, la au moins une ouverture, et notamment la ou les ouvertures d'introduction, notamment d'injection, de matière thermoplastique dans le moule débouche(nt) dans la chambre de moulage à une partie de la surface intérieure qui ne comporte pas ladite surface opposée.

Suivant un mode de réalisation préféré, toute la zone de bord est maintenue à distance de la partie de surface opposée.

Suivant un mode de réalisation préféré, la zone de bord et la surface intérieure sont en continuité l'une avec l'autre et sont maintenues à distance de la surface opposée.

Suivant un autre mode de réalisation possible, la zone de bord est constitué d'un épaulement de la partie de surface intérieure, et seule la partie de bord est maintenue à distance de la surface opposée.

Suivant un autre mode de réalisation possible, la zone de bord comporte une partie bombée qui vient en contact avec la surface opposée à son sommet, le reste de la zone de bord étant maintenue à distance de la surface opposée.

Suivant un mode de réalisation préféré, seule une partie de la zone de bord est maintenue à distance de la surface opposée.

Suivant un mode de réalisation particulièrement préféré, il est prévu un bloc insert, qui comporte une surface supérieure dans laquelle est formée une cavité ou un champ de cavités de forme complémentaire de crochets, qui est disposé de manière amovible à l'intérieur de la cavité de moulage, notamment à un endroit où l'on souhaite former les crochets dans l'objet final et les moyens de sollicitation sont intégrés au bloc insert, la surface supérieure du bloc insert constituant ladite partie de surface intérieure du moule.

Ainsi, pour former à n'importe quel endroit de l'objet moulé le champ de crochets, on place le bloc insert dans la cavité de moulage là ou l'on souhaite former les crochets, sans être tenu par une conception préalable du moule.
Suivant un mode de réalisation préféré de l'invention, les moyens de sollicitation sont constitués d'au moins un ressort. On peut également prévoir que les moyens de sollicitations soient constitués par un vérin hydraulique ou pneumatique.

Le présent exposé se rapporte également à un bloc insert tel qu'utilisé dans un dispositif de moule suivant l'invention.

La présente invention se rapporte également à un procédé de fabrication par moulage d'un objet moulé comportant un crochet ou un champ de crochets issu (s) d'une pièce d'une partie de sa surface extérieure qui consiste à prendre un dispositif formant moule suivant l'invention et à injecter de la matière thermoplastique par une ouverture en une étape unique d'introduction, notamment d'injection.

Par exemple, dans le cas d'un panneau de portière automobile, le rapport peut être supérieur à 10⁵.

De préférence, le crochet a une taille ou hauteur inférieure à 0,9 mm, notamment comprise entre 0,2 mm et 0,7 mm.

En particulier, l'objet moulé comporte à sa surface extérieure au moins une zone en forme de creux ou point correspondant au point d'injection de la matière lors de la fabrication par moulage par injection de l'objet moulé.

A titre d'exemple, on décrit maintenant un mode de réalisation préféré de l'invention en se reportant aux dessins, dans lesquels :
la figure 1 est une vue en coupe transversale d'un dispositif formant moule suivant l'invention ;
la figure 2 est une vue en perspective du bloc insert du dispositif formant moule de la figure 1 ;
la figure 3 est une vue partiellement arrachée de la figure 2 ;
les figures 4A, 4b et 4C sont des schémas expliquant la progression de l'opération de moulage lorsque l'on utilise le dispositif formant moule des figures 1 à 3 ;
la figure 5 est une vue sensiblement équivalente à celle de la figure 3 d'un autre mode de réalisation possible d'un insert de moulage ;
la figure 6 est un schéma représentant la courbe donnant la pression d'injection de la matière thermoplastique en fonction du temps lors de la mise en oeuvre du procédé de moulage suivant l'invention ;

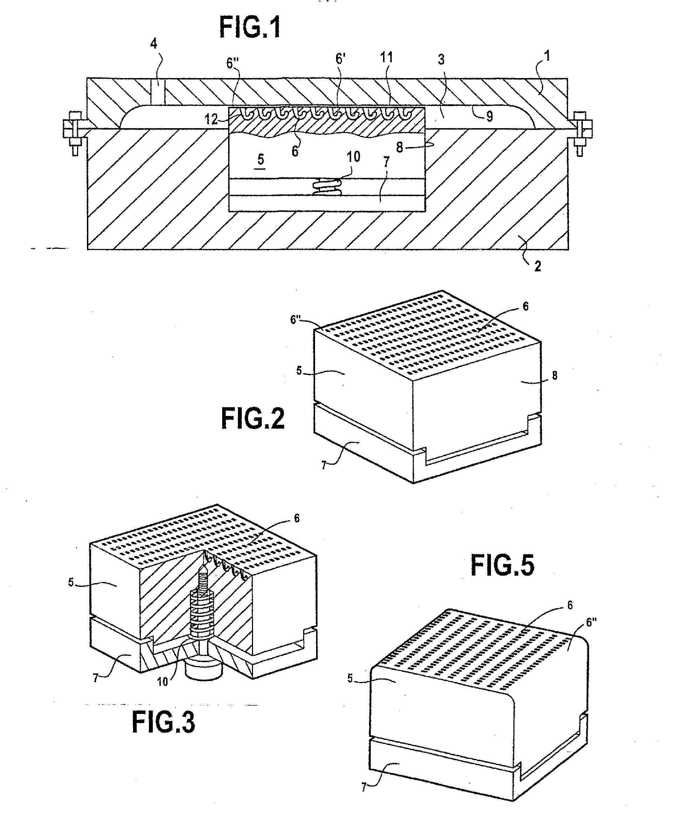

les figures *1*a, 7b, *le,* 7d, 7e et 7f sont des schémas décrivant plusieurs agencements possibles suivant l'invention de la zone de bord, de la surface intérieure à cavités et de la surface opposée ;

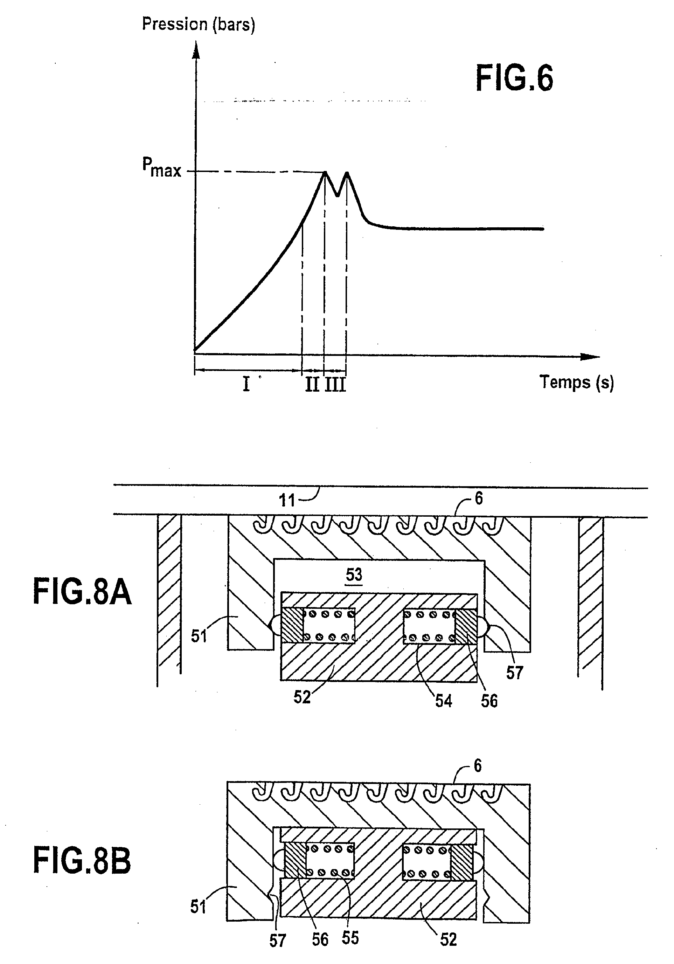

les figures 8a et 8b représentent un autre mode de réalisation d'un dispositif suivant l'invention, dans lequel les parties ayant les mêmes fonctions que dans les modes de réalisation des autres figures ont les mêmes références numériques ; et

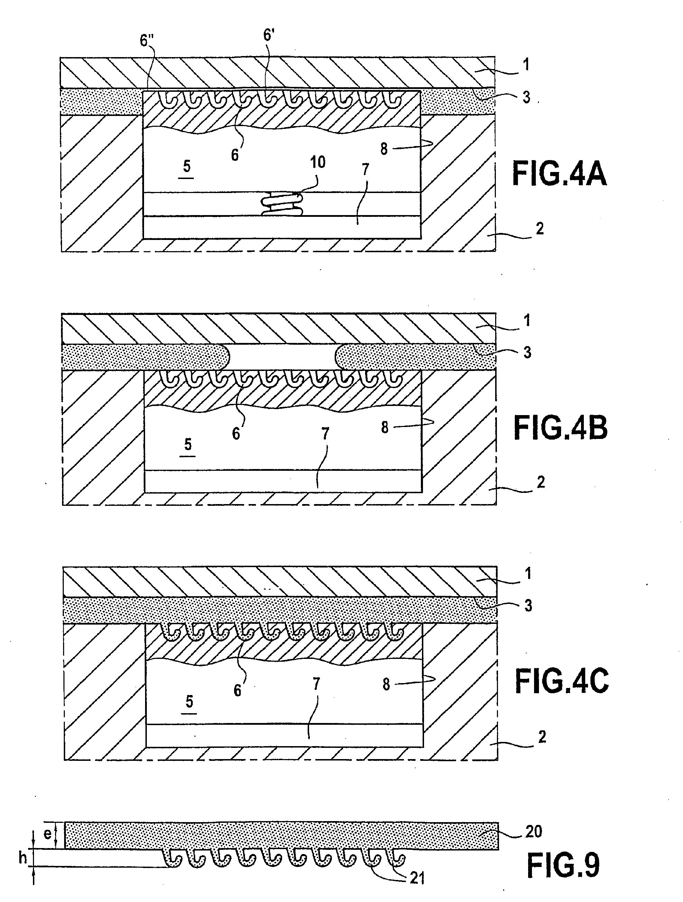

la figure 9 représente en coupe transversale l'objet moulé obtenu à la fin .de. l'étape de moulage de la figure 4a,

A la figure 1, il est représenté un moule constitué principalement de deux pièces 1 et 2 qui sont refermées l'une sur l'autre pour définir une chambre 3 de moulage ayant la forme de l'objet que l'on souhaite mouler. Une ouverture 4 d'introduction par injection de la matière thermoplastique de moulage est formée dans la pièce 1 supérieure. Danc la chambre 3 de moulage, il est disposé un bloc insert 5. Le bloc insert 5 peut être disposé sensiblement n'importe où dans la cavité. Cependant, on fait en sorte qu'il ne se trouve pas en face de l'ouverture 4.

Le bloc insert 5, que l'on voit mieux représenté aux figures 2 et 3, est constitué sensiblement d'un bloc parallélépipédique rectangle, ayant une surface 6 supérieure, dans laquelle est formé un champ de cavités 12 de formes complémentaires de crochets que l'on souhaite former à une surface extérieure de l'objet moulé. Le bloc insert comporte un bloc parallélépipédique 7 de base et un bloc mobile 8. Le bloc 7 est destiné à être fixé (de manière amovible de préférence) par rapport à la surface intérieure 9 de la chambre 3, tandis que le bloc 8 est mobile par rapport au bloc 7 et donc également par rapport au moule. Un ressort 10 est intégré dans le bloc 5 et sollicite le bloc 8 mobile vers une partie de la surface 9 intérieure de la chambre, et notamment vers une partie 11 de cette surface qui est sensiblement en face de la surface 6 supérieure du bloc mobile 8 qui comporte les cavités 12 de formes complémentaires des crochets. La surface 6 supérieure du bloc mobile peut être subdivisée en deux partie, une partie centrale 6' délimitée par les cavités à crochets les plus à l'extérieur et une partie de bord 6" qui entoure la partie centrale 6'.

Le ressort est réglé de telle sorte que, à vide, c'est-à-dire sans pression notamment de la matière thermoplastique injectée dans la cavité, la surface 6 supérieure se trouve à une petite distance de la surface 11 et notamment de sorte qu'un interstice, ou un jeu de l'ordre de 0,01 à 0,1 mm soit formé. Ce jeu est tel que les deux surfaces 6 et 11 ne sont pas en contact complet l'une avec l'autre, et tel cependant que de la matière thermoplastique ne peut pas s'y infiltrer tant que l'ensemble de la chambre, hors l'interstice et les cavités 12, n'a pas été complètement rempli. En particulier la partie ou zone 6" de bord sans cavité de la surface 6 supérieure est maintenue à distance de la partie 11 de surface opposée.

Ce jeu représente de 1/10 à 1/100 de la profondeur des cavités de forme complémentaire des moules (ou de la hauteur des crochets).

Il convient de noter que la surface 6 supérieure de l'insert 5 est de petite dimension par rapport à la surface 9 intérieur, de sorte que l'insert est totalement entouré par le volume restant de la chambre 3.

L'utilisation du dispositif formant moule est la suivante. On injecte par l'ouverture 4 de la matière thermoplastique fluide pour former un objet moulé ayant une forme complémentaire de la chambre 3. Dans un premier temps, la matière thermoplastique s'introduit dans le volume où la résistance à sa progression est la moins grande, c'est-à-dire qu'elle remplit l'ensemble de la chambre 3 à l'exception de l'interstice entre les surface 11 et surface 6, cet interstice étant trop petit pour que de la matière thermoplastique s'y introduise d'elle-même sans pression ou à une pression inférieure à celle qui règne lorsque toute la chambre 3 est remplie. Une fois que sensiblement toute la chambre 3 a été emplie, l'introduction de la matière thermoplastique se poursuivant, la pression de celle-ci dans le volume occupé dans la chambre 3 monte, et la matière thermoplastique, sous l'effet de cette pression, attaque alors l'interstice entre les deux surfaces à crochets et opposée (6 et 11) et, la pression devient telle que soudain, elle s'introduit rapidement dans cet interstice en poussant le bloc insert, notamment sa partie 8 mobile, à l'encontre de la force du ressort 10. La présence de ce ressort et la petite dimension de l'interstice font que la pression nécessaire pour que la matière thermoplastique commence à s'introduire est forte. Il en résulte que la pénétration de la matière thermoplastique dans l'interstice se fait de manière soudaine, presque de manière identique à une explosion, avec une grande force et une grande énergie cinétique, de sorte que la matière thermoplastique est introduite efficacement dans les cavités 12 de formes complémentaires des crochets et les crochets sont bien "formés".

Une fois les crochets formés, on cesse l'introduction de la matière thermoplastique, on laisse refroidir et on ouvre le demi-moule 1 par rapport au demi-moule 2 pour extraire de la chambre 3 l'objet moulé final qui comporte à sa surface extérieure un champ de crochets de formes complémentaires des cavités 12 de moulage qui se trouvent sur la surface supérieure 6 du bloc insert 5. Ce champs de crochets est d'une pièce avec le reste de l'objet moulé et, notamment, il n'y a pas d'interface formant une séparation dans la matière de l'objet.

L'objet moulé obtenu à la fin de l'étape de la figure 4C est représenté à la figure 9. Il est constitué d'un corps 20 principal (sans crochet) en forme de plaque et de crochets 21 issus de la plaque, en étant d'une pièce et d'un seul tenant avec celle ci et notamment en étant issu du même moule. Dans la direction perpendiculaire à la face inférieure de la plaque, de laquelle font saillie les crochets, la hauteur h de chaque crochet est inférieure à l'épaisseur e de la plaque, ces deux valeurs étant mesurées le long de l'axe de la tige du crochet respectif, qui ici est également la normale à la surface extérieure du corps 20. La largeur de la base de la tige, mesurée dans le plan perpendiculaire à l'axe de la tige, est inférieure à l'épaisseur e de la plaque. En outre le champs de crochet ne recouvre qu'une partie de la face inférieure de la plaque, de sorte qu'il recouvre moins de 50% de la surface extérieure totale de la plaque. Il recouvre ici moins de 30% de la plaque et même en réalité moins de 10%, sachant que la figure 9 est une vue en coupe au niveau des crochets et que le champs de crochet, dans la direction perpendiculaire à la figure 9 ne s'étend que sur une dimension relative par rapport à la plaque identique à celle sur laquelle il s'étend dans la direction représenté à la figure, ceci se déduisant sans peine de la forme de l'insert 5 des figures 2, 3 ou 5.

Suivant le mode de réalisation représenté à la figure 5, la zone 6" de bord de la surface supérieure est bombée. Ce bombage fait en sorte qu'il est formé en coopération avec la partie de surface 11 opposée une sorte de coin le long du bord périphérique, coin qui va permettre de faciliter l'attaque de la matière thermoplastique lorsque celle-ci va vouloir s'introduire entre les deux surfaces 6 et 11 qui pourtant viennent en contact l'une avec l'autre au niveau de la zone centrale 6'. Cependant, le contact entre les deux surfaces n'est pas complet puisque au niveau de la zone de bord périphérique, les deux surfaces ne sont pas en contact.

Suivant un autre mode de réalisation non représenté mais couvert par la présente invention, on pourrait également formé les cavités dans la surface intérieure 9, notamment dans la partie 11 de surface et réaliser la surface 6 supérieure du bloc pleine (c'est-à-dire sans cavité). Avec un tel mode de réalisation, on n'obtient certes pas l'avantage de pouvoir placer le champ de crochets où on le souhaite sur l'objet moulé final, mais on obtient cependant un des effets importants de l'invention, à savoir la formation par injection quasi instantanée.des crochets.

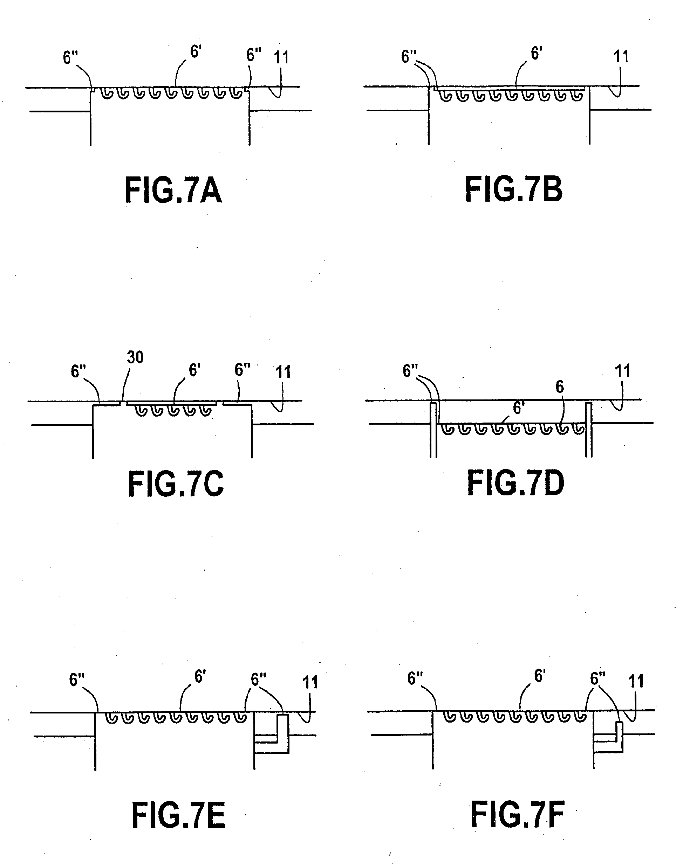

Dans le mode de réalisation représenté schématiquement à la figure 7a, la zone 6" de bord est constituée par un épaulement par rapport à la zone centrale 6', les moyens de sollicitation poussant la surface 6' en contact avec la surface 11 opposée mais l'épaulement maintenant la zone 6" de bord à distance de la surface opposée.

Dans le mode de réalisation représenté schématiquement à la figure 7b, la zone 6" de bord comporte un bombement faisant saillie par rapport à la zone centrale 6', les moyens de sollicitation poussant le sommet du bombement de la zone 6" en contact avec la surface 11 opposée. Cependant la partie en pente du bombement du côté extérieur à la zone centrale 6' est maintenue à distance de la surface opposée, créant un coin permettant l'attaque et l'entrée de la matière thermoplastique lorsque la pression devient suffisante pour contrer la force des moyens de sollicitation.

Dans le mode de réalisation représenté schématiquement à la figure 7c, deux excroissances 30 font saillie de la surface de la zone centrale 6', les moyens de sollicitation poussant ces excroissances en contact avec la surface 11 opposée mais le reste de la surface 6, et notamment la zone de bord 6" étant maintenu à distance de la surface opposée.

Dans le mode de réalisation représenté schématiquement à la figure 7d, seule la zone 6" de bord est sollicitée par les moyens de sollicitations, la zone centrale 6' à crochet étant fixe par rapport à la surface opposée et à distance de celle ci. Les moyens de sollicitations sollicite la zone 6" (qui fait le tour de la zone centrale 6') vers la surface opposée, tout en la maintenant cependant à distance de cette surface opposée. Lorsque la pression de la matière de moulage devient suffisant pour contrer la force des moyens de sollicitation, la zone 6" s'éloigne de la surface opposée et la matière peut pénétrer dans la zone 6' centrale.

Dans les modes de réalisation représentés schématiquement à la figure 7e ou 7f, la zone 6" de bord a une partie qui est excentrée. Les moyens de sollicitation pousse la surface supérieure 6 (constituée de la zone centrale 6' et de la zone de bord 6" excentrée) vers la surface opposée. La poussée est cependant limitée de sorte que la partie excentrée reste à distance d'un petit interstice de la surface opposée, le reste de la surface 6 venant en contact avec la surface opposée.

A la figure 6, il est représenté schématiquement la forme que prend la courbe donnant la pression d'injection de la matière thermoplastique en fonction du temps lors de la fabrication d'un objet moulé. Dans un premier intervalle de temps I, la pression monte de manière croissante régulière, correspondant au remplissage du volume de la chambre, hors l'interstice et les cavités à crochets. Une fois l'intervalle I passé, la pression augmente plus rapidement pendant l'intervalle II, jusqu' à atteindre une pression P max. Pendant un intervalle III très court le remplissage de l'interstice et des cavités a lieu, la pression d'injection diminuant légèrement avant d'augmenter de nouveau. Suivant l'invention l'injection s'effectue en continue et en une seule étape.

Aux figures 8a et 8b, il est représenté un autre mode de réalisation d'un dispositif de moulage suivant l'invention.

Comme on le voit à la figure 8a, le bloc insert 5 est constitué de deux sous bloc 51 et 52. le bloc 51 supérieur définit en son sein, du côté opposé à sa surface 6 supérieure un logement 53 qui est ouvert du côté inférieur et qui reçoit le sous bloc 52. Dans le sous bloc 52, il est formé deux évidemment 54 latéraux qui débouchent aux surfaces latérales du sous bloc 52 et dans lesquels sont reçus respectivement deux ressorts 55 comportant chacun à leur extrémité libre un ergot 56. dans les parois latérales intérieures du sous bloc 51 il est formé deux encoches 57 d'une forme sensiblement complémentaire des ergots 56.

Dans la position représentée à la figure 8a, la surface supérieure 6 est à distance de la surface 11 du moule. Les ergots 56, poussés par les ressorts 55, font saillie hors des évidements 54 et pénètrent au moins en partie dans les encoches 57, de sorte que les deux sous blocs sont rendus solidaires l'un de l'autre. A partir de cette position de la figure 8a, la matière thermoplastique est introduite dans le moule. Lorsque la pression de la matière devient suffisante, le sous bloc 51 est poussé vers le bas en repoussant les ergots dans les évidements 54 de sorte que les sous blocs 51 et 52 sont libérés l'un de l'autre et passent dans la position représentée à la figure 8b, ouvrant largement l'interstice entre les surfaces 11 et 6 pour permettre un remplissage des cavités 12. Une fois la pièce refroidie, les éjecteurs 58 pousse la pièce à l'extérieur du moule et la force de traction des crochets moulés est suffisante pour ramener les deux sous blocs dans la position de la figure 8a.

Dans le présent exposé, on entend par surface supérieure du bloc insert (référencée 6 aux figures) l'ensemble des points de la surface extérieure du bloc insert que l'on voit lorsque l'on regarde le bloc de dessus dans une direction verticale. On entend également par la partie centrale (référencée 6' aux figures) de la surface supérieure la partie de la surface centrale dans laquelle débouchent l'ensemble des cavités destinées à former des crochets et délimitée par les points les plus à l'extérieur des bords les plus à l'extérieur des ouvertures des cavités les plus à l'extérieur de l'ensemble des cavités et par les droites reliant ces points entre eux de sorte que la courbe fermée ainsi obtenue incluse en son sein l'ensemble des cavités. Enfin, la partie de bord (référencée 6" aux figures) est la partie de la surface supérieure à l'extérieur de la courbe délimitant la partie centrale. La partie de bord entoure la partie centrale.

## Revendications

1. Dispositif formant moule pour former un objet d'une pièce et d'un seul tenant obtenu par injection d'une matière de moulage, notamment thermoplastique, en au moins un point d'injection,
ledit objet constitué d'un corps (20) principal ayant un volume de corps défini par l'espace à l'intérieur d'une surface formant enveloppe extérieure, et au moins un crochet (21), de préférence un champ de crochets, issu de même moulage du corps principal (20) de l'objet moulé, le crochet ou chaque crochet ayant une tige ayant un axe longitudinal et une partie d'accrochage faisant saillie latéralement de la tige, dans lequel
- le volume des crochets (21) est sensiblement plus petit que le volume du corps (20) c'est à dire au moins cent fois plus petit, et
- la largeur, ou plus petite dimension transversale, de la tige, mesurée transversalement à l'axe longitudinal, est inférieure à l'épaisseur du corps principal (20), mesurée le long de l'axe longitudinal de la tige,
le dispositif comportant une surface fermée intérieure définissant une chambre principale de moulage (3), au moins une ouverture (4) pour l'introduction de la matière de moulage étant formée pour pouvoir introduire la matière de moulage dans la chambre de moulage (3), au moins une cavité (12) de forme complémentaire d'au moins un crochet, de préférence un champ de cavités (12), débouchant à une partie (6') de la surface intérieure, la dite une partie (6') de la surface intérieure étant entourée par une surface (6") de bord ne comportant pas de cavité, **caractérisé en ce qu'**il est prévu des moyens (10) pour solliciter au moins une partie de la surface (6") de bord et une partie opposée (11) de la surface intérieure l'une vers l'autre, l'agencement étant tel que la sollicitation des moyens de sollicitation (10) est limitée, de sorte que les deux surfaces (6", 11) sollicitées l'une vers l'autre ne peuvent venir en contact complet l'une avec l'autre et qu'il existe toujours un interstice entre lesdites surfaces, l'interstice étant dimensionné de sorte que la matière de moulage ne peut y pénétrer sans qu'une pression correspondant à celle prévalant lorsque sensiblement toute la chambre est emplie de matière de moulage, lui soit appliquée.

2. Dispositif suivant la revendication 1, **caractérisé en ce que** l'interstice est de très petite dimension et notamment est compris entre 0,01 et 0,1 mm, cet interstice étant mesuré dans la direction perpendiculaire aux deux surfaces (6', 11) se faisant face au(x) point(s) de ladite une partie de surface (6') le ou les plus éloignés de la surface opposée (11).

3. Dispositif suivant la revendication 1 ou 2, **caractérisé en ce que** l'interstice est au moins dix fois inférieur à la profondeur de la au moins une cavité (12) de forme complémentaire d'un crochet, de préférence au moins cent fois inférieur.

4. Dispositif suivant l'une des revendications 1 à 3, **caractérisé en ce que** la au moins une ouverture (4), et notamment la ou les ouvertures d'introduction, notamment d'injection, de matière thermoplastique dans le moule débouche(nt) dans la chambre de moulage (3) à une partie de la surface intérieure qui ne comporte pas ladite surface opposée (11).

5. Dispositif suivant l'une des revendications 1 à 4, **caractérisé en ce qu'**il est prévu un bloc insert (5), qui comporte une surface supérieure (6) dans laquelle est formée une cavité (12) ou un champ de cavités (12) dé forme complémentaire de crochets, qui est disposé de manière amovible à l'intérieur de la cavité de moulage (3), notamment à un endroit où l'on souhaite former les crochets dans l'objet final et les moyens de sollicitation (10) sont intégrés au bloc insert (5), la surface supérieure (6) du bloc insert (5) constituant ladite partie de surface intérieure du moule.

6. Dispositif suivant l'une des revendications 1 à 5, **caractérisé en ce que** les moyens de sollicitation (10) sont constitués d'au moins un ressort.

7. Dispositif suivant l'une des revendications 1 à 6, **caractérisé en ce que** les moyens de sollicitations comportent un vérin hydraulique ou pneumatique.

8. Procédé de fabrication par moulage d'un objet moulé comportant un crochet (21) ou un champ de crochets (21) issu(s) d'une pièce d'une partie de sa surface extérieure qui consiste à prendre un dispositif formant moule suivant l'une des revendications 1 à 7 et à injecter de la matière thermoplastique par une ouverture (4) en une étape unique d'injection.

9. Procédé de fabrication selon la revendication 8, comprenant au moins la succession d'étapes suivantes :
- on fournit le dispositif formant moule;
- en une seule étape continue, on injecte une matière de moulage par l'ouverture (4), l'étape d'injection comprenant les étapes consistant à
- remplir la chambre de moulage (3) à l'exception de l'interstice et de la au moins une cavité (12), puis
- en poursuivant l'injection, augmenter la pression de la matière de moulage de sorte qu'elle s'introduise dans l'interstice à l'encontre des moyens de sollicitation (10) et remplisse la au moins une cavité (12).

## Patentansprüche

1. Eine Form bildende Vorrichtung zum Ausbilden eines einstückigen und zusammenhängenden Gegenstandes, der durch Einspritzen einer insbesondere thermoplastischen Formmasse an wenigstens einer Einspritzstelle erhalten wird,
wobei der Gegenstand aus einem Hauptkörper (20) mit einem Körpervolumen, das durch den Raum innerhalb einer eine Außenhülle bildenden Fläche definiert ist, und aus wenigstens einem Haken (21), vorzugsweise einem Hakenfeld besteht, der/das mit dem Hauptkörper (20) des Gussgegenstandes aus einem Stück gegossen ist, wobei der Haken oder jeder Haken einen Schaft mit einer Längsachse und einen von dem Schaft seitlich vorspringenden Einhakteil aufweist, wobei
- das Volumen der Haken (21) deutlich kleiner als das Volumen des Körpers (20), das heißt wenigstens einhundert Mal kleiner ist und
- die Breite, oder kleinste Querabmessung, des Schaftes, quer zu der Längsachse gemessen, geringer als die entlang der Längsachse des Schaftes gemessene Dicke des Hauptkörpers (20) ist,
wobei die Vorrichtung eine geschlossene Innenfläche umfasst, die eine Hauptformkammer (3) definiert, wobei wenigstens eine Öffnung (4) für das Einleiten der Formmasse ausgebildet ist, um die Formmasse in die Formkammer (3) einleiten zu können, wobei wenigstens ein Hohlraum (12) mit komplementärer Form wenigstens eines Hakens, vorzugsweise ein Feld von Hohlräumen (12) an einem Teil (6') der Innenfläche ausmündet, wobei der eine Teil (6') der Innenfläche von einer Randfläche (6"), die keinen Hohlraum umfasst, umgeben ist, **dadurch gekennzeichnet, dass** Mittel (10) vorgesehen sind, um wenigstens einen Teil der Randfläche (6") und einen gegenüberliegenden Teil (11) der Innenfläche aufeinander zu zu belasten, wobei die Anordnung derart ist, dass die Belastung der Belastungsmittel (10) begrenzt ist, so dass die aufeinander zu belasteten beiden Flächen (6",11) nicht vollständig miteinander in Kontakt gelangen können und dass stets ein Zwischenraum zwischen den Flächen vorhanden ist, wobei der Zwischenraum derart bemessen ist, dass die Formmasse nicht darin eindringen kann, ohne dass ein Druck, der demjenigen entspricht, der dann vorherrscht, wenn im Wesentlichen die gesamte Kammer mit Formmasse gefüllt ist, an sie angelegt wird.

2. Vorrichtung nach Anspruch 1, **dadurch gekennzeichnet, dass** der Zwischenraum eine sehr kleine Abmessung aufweist und insbesondere zwischen 0,01 und 0,1 mm beträgt, wobei dieser Zwischenraum in der Richtung senkrecht zu den beiden sich gegenüberliegenden Flächen (6', 11) an der/den Stelle(n) des einen Flächenteils (6'), die von der gegenüberliegenden Fläche (11) am weitesten entfernt ist/sind, gemessen wird.

3. Vorrichtung nach Anspruch 1 oder 2, **dadurch gekennzeichnet, dass** der Zwischenraum wenigstens zehn Mal kleiner als die Tiefe des wenigstens einen Hohlraums (12) mit komplementärer Form eines Hakens, vorzugsweise wenigstens einhundert Mal kleiner ist.

4. Vorrichtung nach einem der Ansprüche 1 bis 3, **dadurch gekennzeichnet, dass** die wenigstens eine Öffnung (4) und insbesondere die Öffnung oder Öffnungen zum Einleiten, insbesondere zum Einspritzen, von Thermoplast in die Form an einem Teil der Innenfläche, der nicht die gegenüberliegende Fläche (11) umfasst, in die Formkammer (3) mündet/münden.

5. Vorrichtung nach einem der Ansprüche 1 bis 4, **dadurch gekennzeichnet, dass** ein Einsatzblock (5) vorgesehen ist, der eine obere Fläche (6), in der ein Hohlraum (12) oder ein Feld von Hohlräumen (12) mit komplementärer Form von Haken ausgebildet ist, umfasst, der in dem Formhohlraum (3), insbesondere an einer Stelle, an der die Haken in dem Endgegenstand ausgebildet werden sollen, lösbar angeordnet ist, und die Belastungsmittel (10) in den Einsatzblock (5) integriert sind, wobei die obere Fläche (6) des Einsatzblocks (5) den Innenflächenteil der Form bildet.

6. Vorrichtung nach einem der Ansprüche 1 bis 5, **dadurch gekennzeichnet, dass** die Belastungsmittel (10) von wenigstens einer Feder gebildet sind.

7. Vorrichtung nach einem der Ansprüche 1 bis 6, **dadurch gekennzeichnet, dass** die Belastungsmittel einen Hydraulik- oder Pneumatikzylinder umfassen.

8. Verfahren zur Herstellung eines Gussgegenstandes durch Gießen, der einen Haken (21) oder ein Feld von Haken (21), der/die mit einem Teil seiner Außenfläche aus einem Stück entstanden ist/sind, umfasst, welches darin besteht, eine eine Form bildende Vorrichtung nach einem der Ansprüche 1 bis 7 zu nehmen und Thermoplast über eine Öffnung (4) in einem einzigen Spritzschritt einzuspritzen.

9. Herstellungsverfahren nach Anspruch 8, umfassend wenigstens die Folge folgender Schritte:
- Bereitstellen der eine Form bildenden Vorrichtung,
- Einspritzen einer Formmasse über die Öffnung (4) in einem einzigen durchgehenden Schritt, wobei der Schritt des Einspritzens die Schritte umfasst, die darin bestehen:
- die Formkammer (3) mit Ausnahme des Zwischenraums und des wenigstens einen Hohlraums (12) zu füllen, anschließend,
- unter Fortsetzen des Einspritzens, den Druck der Formmasse zu erhöhen, so dass sie entgegen der Belastungsmittel (10) in den Zwischenraum eindringt und den wenigstens einen Hohlraum (12) ausfüllt.

## Claims

1. A device forming a mold for forming an integral one-piece article obtained by injecting a molding material, in particular a thermoplastic material, via at least one injection point,
said article being constituted by a main body (20) having a body volume defined by the space inside a surface forming an outer envelope, and by at least one hook (21), preferably a field of hooks, coming from the same molding of the main body (20) of the molded article, the or each hook having a stem having a longitudinal axis and a hooking portion projecting laterally from the stem, wherein:
· the volume of the hooks (21) is substantially smaller than the volume of the body (20), i.e. at least one hundred times smaller; and
· the width, or the smallest transverse dimension, of the stem, as measured transversely to the longitudinal axis, is less than the thickness of the main body (20) as measured along the longitudinal axis of the stem;
the device having a closed inside surface defining a main molding chamber (3), at least one opening (4) for introducing the molding material being formed to enable the molding material to be introduced into the molding chamber (3), at least one cavity (12) of shape complementary to at least one hook, preferably to a field of cavities (12), opening out into a portion (6') of the inside surface, said portion (6') of the inside surface being surrounded by an edge surface (6") not including a cavity, the device being **characterized in that** urging means (10) are provided for urging at least a portion of the edge surface (6") and a facing portion (11) of the inside surface towards each other, the arrangement being such that the urging of the urging means (10) is limited, such that the two surfaces (6", 11) that are urged towards each other cannot come completely into contact with each other and such that there continues to exist a gap between said surfaces, the gap being dimensioned in such a manner that the molding material cannot penetrate therein without pressure being applied thereto that corresponds to the pressure that exists when substantially the entire chamber has been filled with molding material.

2. A device according to claim 1, **characterized in that** the gap is of very small size, and in particular in the range 0.01 mm to 0.1 mm, the gap being measured in the direction perpendicular to the two facing surfaces (6', 11) at the point(s) of said portion of the surface (6') furthest from the facing surface (11).

3. A device according to claim 1 or claim 2, **characterized in that** the gap is at least ten times smaller than the depth of the at least one cavity (12) of shape complementary to a hook, and preferably at least one hundred times smaller.

4. A device according to any one of claims 1 to 3, **characterized in that** the at least one opening (4), and in particular the opening(s) for introducing, and in particular for injecting, thermoplastic material into the mold open(s) out into the molding chamber (3) at a portion of the inside surface that does not include said facing surface (11).

5. A device according to any one of claims 1 to 4, **characterized in that** an insert block (5) is provided having a top surface (6) in which there is formed a cavity (12) or a field of cavities (12) of shape complementary to hooks, which block is arranged removably inside the molding cavity (3), in particular at a location where it is desired to form the hooks on the final article, and the urging means (10) are incorporated in the insert block (5), the top surface (6) of the insert block (5) constituting said inside surface portion of the mold.

6. A device according to any one of claims 1 to 5, **characterized in that** the urging means (10) are constituted by at least one spring.

7. A device according to any one of claims 1 to 6, **characterized in that** the urging means comprise a hydraulic or pneumatic actuator.

8. A fabrication method of fabricating a molded article by molding, the article including a hook (21) or a field of hooks (21) made integrally with a portion of its outside surface, which method consists in taking a mold-forming device according to any one of claims 1 to 7 and in injecting thermoplastic material via an opening (4) in a single injection step.

9. A fabrication method according to claim 8, including at least the following succession of steps:
· providing the mold-forming device; and
· in a single continuous step, injecting molding material via the opening (4), the injection step comprising the steps consisting in:
· filling the molding chamber (3) with the exception of the gap and of the at least one cavity (12); and then
· continuing injection so as to increase the pressure of the molding material so that it penetrates into the gap against the urging means (10) and fills the at least one cavity (12).
